# EUROPEAN PATENT SPECIFICATION

(11) **EP 1 973 394 B1**
(45) Date of publication and mention of the grant of the patent: **28.07.2010**
(21) Application number: 06808550.5
(22) Date of filing: 16.11.2006
(51) Int. Cl.: A01B 19/02, E02F 3/76

(54) **IMPROVEMENTS IN AND RELATING TO AGRICULTURAL IMPLEMENTS**
VERBESSERUNGEN BEI LANDWIRTSCHAFTLICHEN GERÄTEN UND DIESE BETREFFENDE
INSTRUMENTS AGRICOLES AMELIORES

(30) Priority: 01.12.2005 GB 0524476
(43) Date of publication of application: 01.10.2008
(73) Proprietor: Lawrenson, James, Chorley Lancashire PR6 0EE (GB)
(72) Inventor: Lawrenson, James, Chorley Lancashire PR6 0EE (GB)
(74) Representative: Clark, David James
(86) International application number: PCT/GB2006/004260
(87) International publication number: WO 2007/063277

(56) References cited:
- DE-A1- 3 937 634
- DE-U1- 8 629 208
- FR-A1- 2 419 364
- GB-A- 1 098 690
- GB-A- 2 050 475
- GB-A- 2 192 418
- JP-A- 8 275 603
- US-A- 3 889 760

## Description

### Field of the invention

The present invention relates to agricultural implements, in particular to agricultural implements for use with a vehicle such as an agricultural tractor.

### Background to the Invention

Agricultural implements, such as scraping apparatus for scraping surface deposits from a farmyard or the like during both forward and rearward movement of a tractor to which they are attached are known from e.g. GB 2 050 475.

GB 2 192 418 describes a screeding machine, operated by a rough terrain fork lift or other tractive machine, for levelling and variably compacting sand and other granular materials, comprises two or more screeder beams or other levelling and/or compacting means parallel to each other and joined by one of more cross members.

The apparatus of GB 2 050 475 includes scraping blades with a resilient portion arranged to contact the surface to be scraped so as to provide a partial sealing contact between the blades and the surface to be scraped. This allows the scraping of liquids and slurries, as well as solids and semi-solids. The resilient portion of the blades can be conveniently formed from a plastics or rubber material.

When using the apparatus of GB 2 050 475 the height at which the apparatus is held above the surface to be scraped is important. Holding the apparatus nearer to the surface increases scraping pressure, and can lead to more effective scraping. However, excessive scraping pressure can lead to rapid wear of the scraping blades, in particular wear of resilient portions on the scraping blades. To address this problem, adjustable pivoting and spring loaded connection means for connection to a tractor have been developed. However, these means are relatively complex, and are therefore relatively expensive. Furthermore, regular adjustment by a user may be required to achieve optimum scraping without excessive wear.

Also, if the connection means does not align the apparatus parallel to the surface to be scraped, either through connection inaccuracy or unevenness in the surface to be scraped, uneven blade wear and/or ineffective scraping may occur.

Similar problems may occur in other agricultural implements such as ploughs, balers, mowers etc. where a connection means is joined to a working portion.

It is an aim of preferred embodiments of the present invention to address one problems associated with the prior art, whether identified herein, or otherwise.

### Summary of the Invention

According to the present invention there is provided an agricultural implement comprising: a working portion; and a connection means adapted for connection to a vehicle, wherein the working portion is coupled to the connection means by a flexible coupling means;
wherein, the flexible coupling means comprises two coupling strips;
the agricultural implement further comprising a yard scraper wherein the working portion comprises a frame with a first scraping blade effective in a scraping direction;
wherein the frame depends from the connection means supported by the two coupling strips which are distanced in the scraping direction;
characterised in that the two coupling strips are each in the form of a band, wherein each band has an extent in the horizontal direction which is substantially perpendicular to the scraping direction.

Suitably, the yard scraper further comprises a stop means located adjacent to the coupling strip. Suitably, the stop means is arranged to limit movement of the frame relative to the connection means in a direction parallel to the scraping direction. Suitably, the stop means is arranged to limit movement of the frame relative to the connection means in a vertical direction.

Suitably, the stop means comprises a rigid flange extending from the connection means and/or the frame, the rigid flange located alongside the coupling strip. Suitably, displacement of the frame relative to the connection means in a direction parallel to the scraping direction causes the coupling strip to engage the rigid flange. Suitably, the rigid flange runs substantially parallel to the coupling strip.

Suitably, the stop means comprises a resilient flange extending from the connection means and/or the frame, the resilient flange located alongside the coupling strip. Suitably, displacement of the frame relative to the connection means in a direction parallel the scraping direction causes the resilient flange to engage the rigid flange. Suitably, the resilient flange runs substantially parallel to the coupling strip.

Suitably, the resilient flange is located on one of the frame and the connection means, and the rigid flange is located on the other of the frame and the connection means. Suitably, the resilient flange is located on the connection means. Suitably, the resilient flange and the rigid flange are located alongside the same side of the coupling strip.

Suitably, the first and second coupling strips are of substantially identical construction. Suitably, the stop means is a first stop means comprising first rigid and resilient flanges associated with the first coupling strip, and the yard scraper comprises a second stop means associated with the second coupling strip and comprising second rigid and resilient flanges.

Suitably, the frame comprises a second scraping blade spaced apart from the first scraping blade in the scraping direction, each blade capable of pivoting towards the other. Suitably, the second blade is effective in a reverse scraping direction. Suitably, the first and second blades are substantially parallel to one another. Suitably, the reverse scraping direction is parallel to the scraping direction, but is of opposite sense to the first scraping direction.

Suitably, displacement of the connection means in the scraping direction relative to the frame moves the first coupling strip away from the first rigid flange and moves the second coupling strip toward the second rigid flange. Suitably, displacement of the connection means in the scraping direction relative to the frame moves the first resilient flange toward the first rigid flange, and moves the second resilient flange away from the second rigid flange. Suitably, displacement of the connection means in the reverse scraping direction relative to the frame has the opposite effects.

Suitably, the first and second stop means are of substantially identical construction, arranged to operate substantially symmetrically in response to relative displacement of the frame and the connection means in the scraping and reverse scraping directions.

Suitably, the or each coupling strip comprises a strip of resilient material. Suitably, the or each coupling strip comprises a rubber or plastics material.

Suitably, one or both of the blades has a resilient portion along a lower edge. Suitably, the resilient portion comprises a strip of rubber or resilient plastics material.

Suitably, the connection means is arranged to be connected to a three-point linkage of an agricultural tractor.

### Brief Introduction to the Figures

For a better understanding of the invention, and to show how embodiments of the same may be carried into effect, reference will now be made, by way of example, to the accompanying diagrammatic drawings in which:
Figure 1 shows a side view of a yard scraper according to a first embodiment of the invention coupled to an agricultural tractor;
Figure 2 shows a side perspective view of a second coupling strip;
Figure 3 shows a side perspective view of a first coupling strip;
Figure 4 shows a side view of a yard scraper according to a comparative example;
Figure 5 shows a side view of a yard scraper according to a third embodiment of the invention;
Figure 6 shows a side view of a yard scraper according to a fourth embodiment of the invention; and
Figure 7 shows a side vies of a yard scraper according to a fifth embodiment of the invention.

### Description of Preferred Embodiments

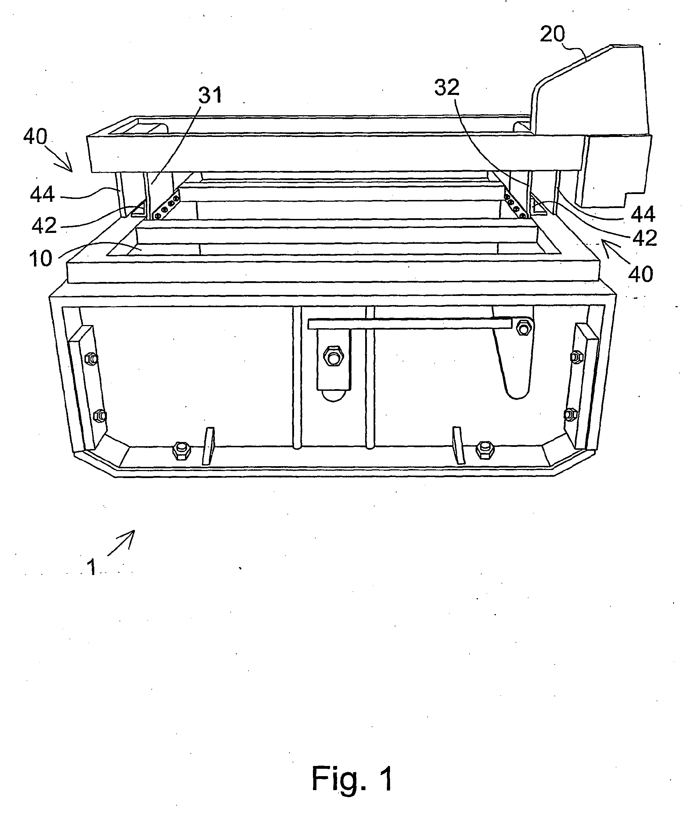

Referring now to Figure 1 of the drawings, in a first embodiment of the invention an agricultural implement in the form of a yard scraper 1 comprises working portion comprising a frame 10, the frame coupled to a connection means 20. The connection means 20 is shown connected to an agricultural tractor. The yard scraper 1 can be pulled or pushed by a vehicle coupled to the connection means, and operates in a scraping direction left to right as seen in Figure 1, and a reverse scraping direction right to left as seen in Figure 1.

The frame 10 and connection means 20 are coupled to one another by a flexible coupling means in the form of first and second coupling strips 31, 32. The first and second coupling strips 31, 32 are arranged substantially perpendicular to the scraping and reverse scraping directions. The coupling strips 31, 32 comprise a resilient, rubber material. Each coupling strip also has a stop means 40 associate therewith.

In use the connection means 20 is held by a vehicle so that the frame 10 depends from the connection means 20. The frame 10 comprises a base 12. In use the connection means 20 is held by a vehicle so that the base 12 is in contact with the surface to be scraped. Within the frame, first and second scraping blades are provided to engage the surface to be scraped and to perform the scraping. The first scraping blade is provided relatively further away from the tractor as shown in Figure 1, and the second scraping blade is provided relatively closer to the tractor as shown in Figure 1. The first and second scraping blades are pivotally coupled to the frame 12, and can pivot towards one another.

Any slight inaccuracy in the alignment of the connection means 20, or unevenness in the surface to be scraped are automatically compensated for by the natural flexibility and stretch of the coupling strips 31,32. Furthermore, excess scraping pressure can be avoided, as the coupling strips 31, 32 compress and buckle if the frame 10 is forced too close to the connection means 20. These factors combine allow a large tolerance in the positioning of the connection means 20 over which effective scraping can be achieved.

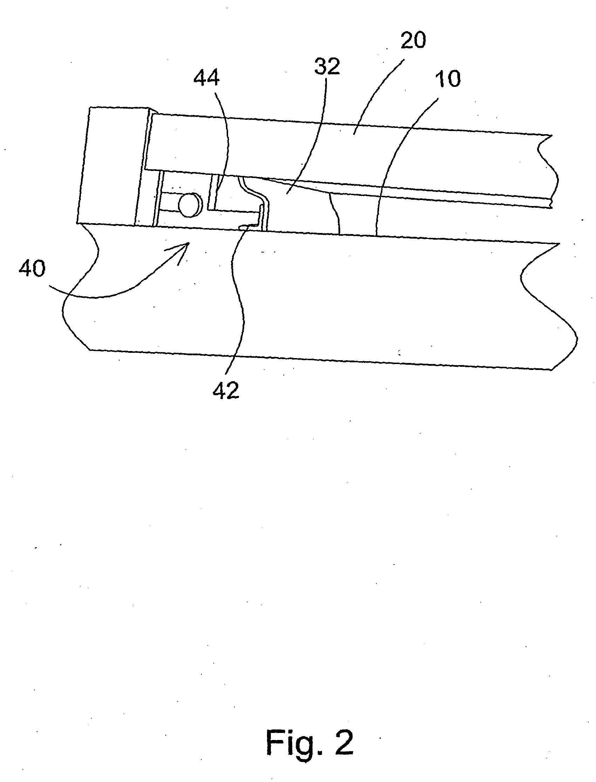

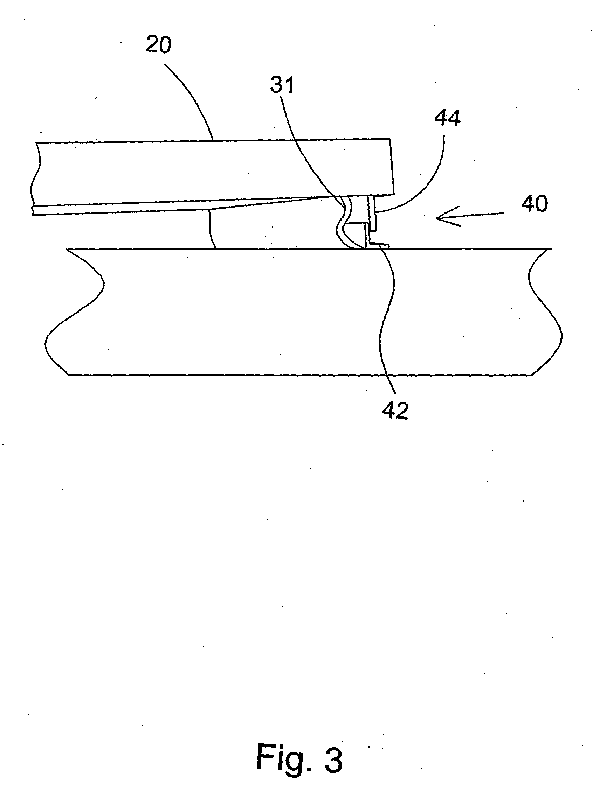

The operation of the first and second coupling strips 31, 32 and the stop means 40 will now be described with reference to Figures 2 and 3.

The first coupling strip 31 has a stop means 40 adjacent to it, with the stop means 40 arranged to limit movement of the frame 10 relative to the connection means 20. The stop means 40 comprises a rigid flange 42 which is involved in limiting relative movement between the frame 10 and the connection means 20 parallel to the scraping direction, and further comprises a resilient flange 44 which is involved in limiting the approach of the connection means 20 to the frame 10, and also involved in limiting relative movement between the frame 10 and the connection means 20 parallel to the scraping direction.

The rigid flange 42 extends from the frame 10 and runs alongside and parallel to the coupling strip 31. Displacement of the frame 10 in the reverse scraping direction relative to the connection means 20 causes the first coupling strip 31 to engage the rigid flange 42. Engagement of the first coupling strip 31 with the rigid flange is shown in Figure 2.

The resilient flange 44 extends from the connection means 20, and runs alongside and parallel to the coupling strip 31. Displacement of the frame 10 relative to the connection means 20 in the scraping direction causes the coupling strip to engage the rigid flange 42. The resilient flange 44 and the rigid flange 42 are located alongside the same side of the coupling strip 31 as one another. The resilient flange 44 can deform to allow some flexibility to the coupling between the frame 10 and the connection means 20 even when loading on the frame 10 causes relative displacement such that the rigid and resilient flanges 42, 44 contact one another.

The resilient flange 44 may also engage the frame 20 to prevent vertical bumping of the frame 10 against the connection means 20.

The second coupling strip 32 also has a stop means 40 adjacent to it, with the stop means 40 arranged to limit movement of the frame 10 relative to the connection means 20 in conjunction with the stop means 40 adjacent to the first coupling strip 31.

As can be seen from Figure 1, the coupling strips 31, 32 and stop means 40 are generally symmetrical about a vertical reflection plane at the middle of the yard scraper 1 when viewed from the side. The operation of the stop means 40 located adjacent to the second coupling strip 32 will be not be described - it is clear that with the directions reversed the stop means both function in substantially the same way. Both first and second coupling strips 31, 32 and stop means 40 cooperate to maintain the relative position of the frame 10 and the coupling means 20 when the yard scraper 1 is in use.

In particularly preferred embodiment the connection means 20 is arranged to be connected to a three-point linkage of an agricultural tractor. However, the connection means 20 may have any suitable interface for coupling to a vehicle or other source of motive power.

Coupling strips and resilient flanges of approximately 1-2cm thick rubber are preferred for yard scrapers of around 2m width. However, the material type and thickness chosen can be varied according to the weight, dimensions and expected scraping loads of a particular yard scraper. As well as natural and synthetic rubbers, a range of plastics materials can be used.

In particularly preferred embodiments the second coupling strip 32 may be made thinner than the first coupling strip 31, or otherwise made more flexible. Typically, the loads imposed on the first coupling strip 31 in use are less than the loads imposed on the second coupling strip 32.

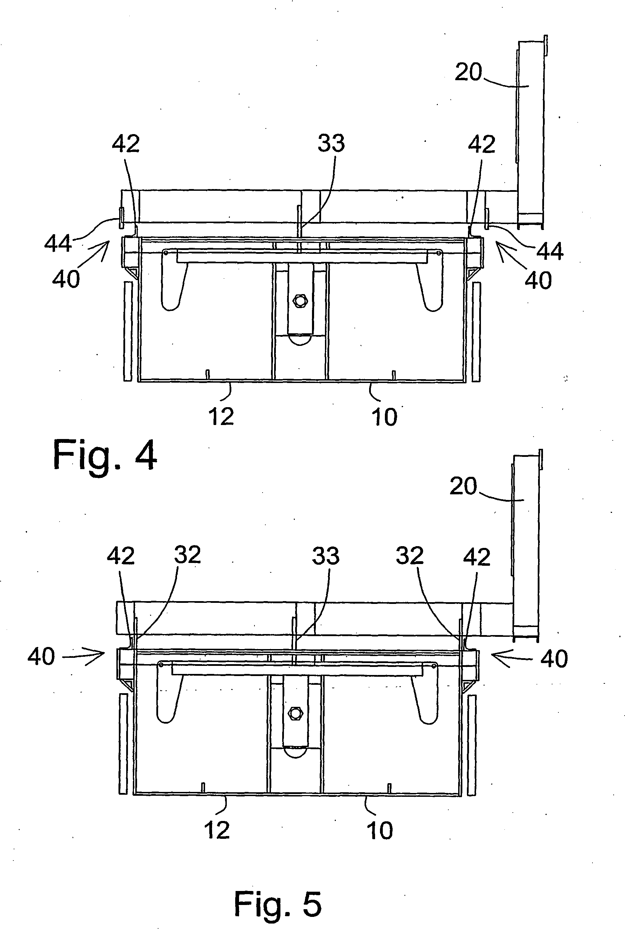

Figures 4-7 show alternative coupling strips. In Figure 4, as comparative example, a centrally positioned coupling strip 33 is provided, with stop means 40 as in the embodiment of Figures 1-3. In Figure 5 the centrally positioned coupling strip 33 is used with simplified stop means 40. The simplified stop means do not include the resilient flanges 44.

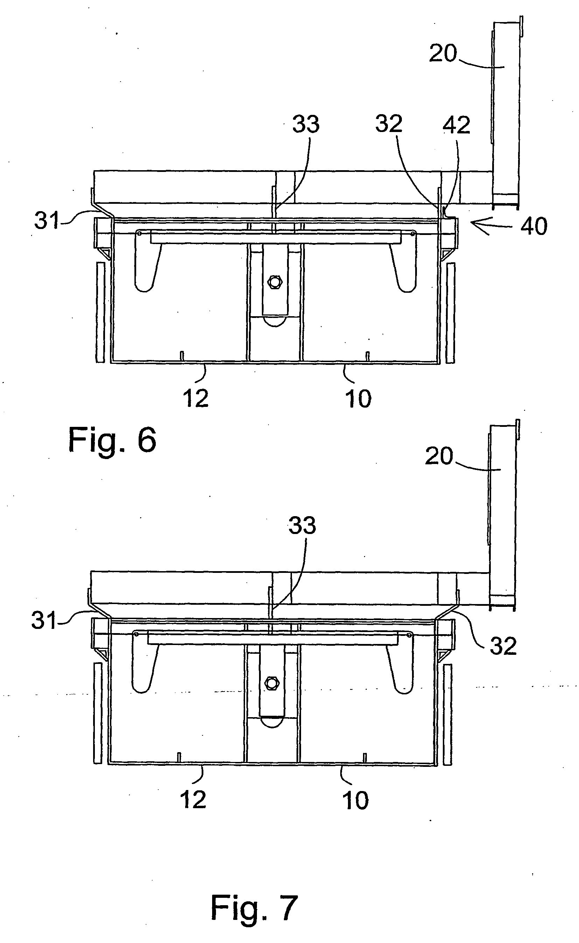

Figure 6 shows an embodiment in which a central coupling strip 33 is provided; a simplified stop means 40 is provided for the second coupling strip, and the first coupling strip is at rest in a non-planar configuration, with upper and lower edges offset from one another.

Figure 7 shows an embodiment in which first and second coupling strips 31, 32 are arranged at rest in a non-planar configuration, with upper and lower edges offset from one another.

Although single continuous coupling strips have been described, it will be appreciated that other arrangements are possible, for example discontinuous strips, or two or more close coupled or spaced apart parallel strips could be used. Preferably, the coupling strips are retained by clamping in place, sandwiched between a cross member in the frame and a support plate bolted through the coupling strip and the cross member. In addition to the two coupling strips, a further coupling strip aligned centrally to the frame could be used.

In other embodiments, the coupling strips may be connected to the frame/connection means in such a way as to allow the position or rotation of the coupling strips to be adjusted. Such adjustment can be used to vary the load bearing characteristics of the coupling strips. The relative separation of the frame and connection means may also be altered this way, either by fixing in one of a plurality of predetermined settings or by powered on the fly adjustment.

The coupling strips described exhibit desirable characteristics when the yard scraper is accelerated from rest, and when the yard scraper is in use scraping a surface. As the yard scraper is accelerated from rest the coupling strips are deflected, producing an upward force on the frame due to tension in the coupling strips. The upward force on the frame reduces the contact force with the surface to be scraped, and therefore reduces the frictional force between the frame and the surface to be scraped. Reducing the frictional force on acceleration reduces the demand on the vehicle drawing the yard scraper.

Furthermore, when the yard scraper described is in use scraping a surface the coupling strips are deformed by the weight and drag of the frame. The coupling strips can deform by twisting, buckling and compressing to absorb and/or deflect any accidental impacts between the frame 10 and e.g. a projecting wall or other obstacle. In the unlikely event of damage to a coupling strip, it is relatively easy to replace the coupling strip using simple tools. It is preferable that impact damage is restricted to the relatively inexpensive coupling strips, rather than to the metal components of the frame or connection means. This is so that repair of the yard scraper can be effected easily and cheaply.

Thus a yard scraper has been described which is of simple construction, and which offers effective scraping without the need for complicated user adjustments. The yard scraper described also reduces blade wear, is effectively self levelling and has a benefits in resilience to cope with accidental knocks. Although the example of a yard scraper has been used, other embodiments may comprise agricultural implements such as ploughs, balers, mowers etc.

## Claims

1. An agricultural implement (1) comprising: a working portion; and a connection means (20) adapted for connection to a vehicle, wherein the working portion is coupled to the connection means (20) by a flexible coupling means (31, 32);
wherein, the flexible coupling means (31, 32) comprises two coupling strips (31, 32);
the agricultural implement further comprising a yard scraper (1); wherein the working portion comprises a frame (10) with a first scraping blade effective in a scraping direction;
wherein the frame (10) depends from the connection means (20) supported by the two coupling strips (31, 32) which are distanced in the scraping direction;
**characterised in that** the two coupling strips (31, 32) are each in the form of a band, wherein each band has an extent in the horizontal direction which is substantially perpendicular to the scraping direction.

2. The agricultural implement of claim 1, wherein the frame (10) comprises a second scraping blade spaced apart from the first scraping blade in the scraping direction, each blade capable of pivoting towards the other.

3. The agricultural implement of claim 2, wherein the second blade is effective in a reverse scraping direction.

4. The agricultural implement of claim 3, wherein the reverse scraping direction is parallel to the scraping direction, but is of opposite sense to the first scraping direction.

5. The agricultural implement of any one of claims 2, 3 or 4, wherein the first and second blades are substantially parallel to one another.

6. The agricultural implement of any one of claims 1 to 5, wherein one or both of the scraping blades has a resilient portion along a lower edge.

7. The agricultural implement of claim 6, wherein the resilient portion comprises a strip of rubber or resilient plastics material.

## Patentansprüche

1. Ein landwirtschaftliches Gerät (1) mit einem Arbeitsteil und einem Verbindungselement (20), das für eine Verbindung zu einem Fahrzeug angepasst ist. Das Arbeitsteil ist mittels einer biegsamen Kupplung (31, 32) an das Verbindungselement (20) angekuppelt;
Das biegsame Kupplungselement (31, 32) umfasst zwei Kupplungstreifen (31, 32);
Desweiteren umfasst das landwirtschaftliche Gerät einen Hofschaber (1). Das Arbeitsteil des Hofschabers besteht aus einem Rahmen (10) und einer ersten in Schaberichtung wirksamen Ziehklinge.
Der Rahmen (10) hängt an dem Verbindungselement (20), d.h. er wird durch die zwei Kupplungsstreifen (31, 32), die sich in Schaberichtung von einander trennen, abgestützt;
**Dadurch gekennzeichnet, dass** die zwei Kupplungsstreifen (31, 32) jeweils die Form eines Bandes < haben, wobei jedes Band in waagerechter Richtung ein Maß hat, das-> im Wesentlichen senkrecht zur Schaberichtung ist.

2. Das in Anspruch 1 beschriebene landwirtschaftliche Gerät, bei dem der Rahmen (10) eine zweite Ziehklinge umfasst, die in Schaberichtung von der ersten Ziehklinge abgetrennt ist. Jede Klinge kann sich in die Richtung der anderen drehen.

3. Das in Anspruch 2 beschriebene landwirtschaftliche Gerät, bei dem die zweite Klinge in gegenläufiger Schaberichtung wirksam ist.

4. Das in Anspruch 3 beschriebene landwirtschaftliche Gerät, bei dem die gegenläufige Schaberichtung parallel zur Schaberichtung, aber der ersten Schaberichtung entgegengesetzt ist.

5. Das in Anspruch 2, 3 oder 4 beschriebene landwirtschaftliche Gerät, bei dem die erste und die zweite Klinge im Wesentlichen parallel zueinander sind.

6. Das in einem der Ansprüche 1 bis 5 beschriebene landwirtschaftliche Gerät, bei dem eine oder beide Ziehklingen an der unteren Kante ein elastisches Teil hat bzw. haben.

7. Das in Anspruch 6 beschriebene landwirtschaftliche Gerät, bei dem der elastische Teil aus einem Gummistreifen oder einem elastischen Kunststoffmaterial besteht.

## Revendications

1. Un ustensile agricole (1) comprenant : une partie de travail ; et un dispositif de raccordement (20) adapté pour l'attelage à un véhicule, et dont la partie de travail est accouplée au dispositif de raccordement (20) par un raccord flexible (31, 32) ;
dans lequel le raccord flexible (31, 32) comprend deux bandes d'attelage (31, 32) ;
l'ustensile agricole comprend également un racleur de cour (1), dont la partie de travail comprend un châssis (10), avec une première lame de raclage active dans le sens du raclage ;
dans lequel le châssis (10) est tributaire du dispositif de raccordement (20) supporté par les deux bandes d'attelage (31, 32), espacées dans la direction du raclage ;
**caractérisé par le fait que** les deux bandes d'attelage (31, 32) ont chacune la forme d'une bande, et au sein duquel chaque bande présente une extension dans le sens horizontal, qui est, en grande partie, perpendiculaire au sens du raclage.

2. Ustensile agricole conforme à la revendication 1, dans lequel le châssis (10) comprend une deuxième lame de raclage espacée de la première lame de raclage, dans le sens du raclage, chaque lame pouvant pivoter vers l'autre lame.

3. Ustensile agricole conforme à la revendication 2, dans lequel la deuxième lame est efficace dans le raclage dans la direction inverse.

4. Ustensile agricole conforme à la revendication 3, dans lequel le raclage dans la direction inverse est parallèle à la direction du raclage, mais dans le sens opposé à la direction de raclage initiale.

5. Ustensile agricole conforme aux revendications 2, 3 ou 4, dans lequel les première et deuxième lames sont en grande partie parallèles l'une à l'autre.

6. Ustensile agricole conforme aux revendications 1 à 5, dans lequel une lame de raclage, ou les deux, présentent une partie flexible le long d'un bord inférieur.

7. Ustensile agricole conforme à la revendication 6, dans lequel la partie flexible comprend une bande de caoutchouc ou de matière plastique élastique.
